# EUROPEAN PATENT SPECIFICATION

(11) **EP 3 503 018 B1**
(45) Date of publication and mention of the grant of the patent: **05.03.2025**
(21) Application number: 17210480.4
(22) Date of filing: 22.12.2017
(51) Int. Cl.: G06T 5/00, H04N 5/20, H04N 5/14, G06T 5/94

(54) **ADAPTIVE LOCAL CONTRAST ENHANCEMENT ZONE FOR SCALED VIDEOS**
ADAPTIVE LOKALEN KONTRASTERHÖHUNGSZONE FÜR SKALIERTE VIDEOS
ZONE D'AMÉLIORATION DU CONTRASTE LOCAL ADAPTATIF POUR DES VIDÉOS MISES À L'ÉCHELLE

(43) Date of publication of application: 26.06.2019
(73) Proprietor: Vestel Elektronik Sanayi ve Ticaret A.S., 45030 Manisa (TR)
(72) Inventor: KIRGIZ, Gamze, 45030 Manisa (TR); IKIZLER, Anil, 45030 Manisa (TR); EREN, Sibel, 45030 Manisa (TR)
(74) Representative: Beck Greener LLP

(56) References cited:
- WO-A1-2012/109528
- US-A1- 2011 134 135

## Description

The present invention relates to a method and apparatus for enhancing video quality.

Electronic display devices, such as computer monitors and televisions, are often desired to provide high quality images with an efficient energy consumption. For conserving energy, display devices may use dimming or auto backlight algorithms to reduce the amount of light the display produces. Display devices may use local contrast enhancement algorithms which can improve contrast perception dramatically. However, operating the processes required for these algorithms can have the disadvantage of redundant power consumption in some situations, and thus a lowered energy efficiency for display devices.

A local contrast enhancement algorithm divides an image frame into smaller operation windows, then analyses and applies different curves to each window. The division of the frame into smaller windows increases the total number of operations performed by the algorithm, since the operations are performed on each window.

It is challenging for display devices to determine the quality of video content and then apply appropriate enhancement processes. The resolution of a displayed video is the only indicator of video quality for display devices. However, checking the video resolution can be an unreliable way of determining video quality because the resolution can be changed by upscaling or downscaling the video signal.

If the video content is up-scaled to a resolution that is higher than the native resolution of the video content, applying a local contrast enhancement algorithm that assumes the higher resolution will result in wasted energy.

Known methods of measuring and increasing video quality which perform local processes on regions within a frame have the problem of inefficient energy consumption. WO2012109528A1 discloses that the window size of a sharpening filter is dependent on the resolution of the input video. US 2011/0019096 discloses a method and a system for adaptive image enhancement that divides a frame into pixel regions and uses luminance histograms and spectral histograms to measure the image quality of each pixel region. US2011134135A1 discloses that the image filtering has to be adapted to the native resolution of the input video and not to the actual resolution of the input video.

US 8,244,056 discloses an image contrast enhancement apparatus and method using histogram adjustment. US 6,163,621 discloses a histogram equalisation process for contrast enhancement during image processing which divides an equalisation image screen into overlapping windows and performs histogram equalisation on each window.

According to a first aspect of the present invention, there is provided a method for video enhancement, the method comprising: receiving an input video; receiving a video container for the input video, wherein the video container comprises at least a first resolution and video content data comprising codec type, bitrate and frame rate of the input video; determine a second resolution from the first resolution and the video content data of the video container; comparing the first resolution to the second resolution; determining a local contrast enhancement operation window size in dependence on the result of the comparison between the first resolution and the second resolution wherein the local contrast enhancement operation window size depends on the lowest of the first resolution and the second resolution; applying a local contrast enhancement algorithm with the determined window size to the input video; wherein the first resolution is the resolution of the input video; and wherein the second resolution is the native resolution of the input video.

The method provides the capability of adaptive sizing of operation windows in response to resolution information of the video. The adaptive window size allows the windows to be optimally sized to minimise the number of operations in a local contrast enhancement operation, which increases the efficiency of the operations in terms of energy consumption.

Basing the operation window size on a lower resolution results in larger windows and thus fewer operations per frame. This minimises the power consumption of the enhancement operation. If a video has been up-scaled, then its resolution is higher than its native resolution. By considering both the video resolution and the native resolution, the operation window size can be optimised. If the native resolution is lower than the video resolution, then the size of the operation window can be larger and so less power is consumed by the fewer operations.

The video content data is used in combination with resolution data to provide a determination of native resolution.

In one example, the method further comprises outputting the input video to an electronic display device after applying the local contrast enhancement algorithm. The enhanced video with improved image quality can be displayed on a computer monitor, television, smartphone, or a wide range of other electronic display devices for a clearer picture and a better viewing experience.

In an example, the method further comprises determining the presence and/or amount of motion in the input video before determining the second resolution. In one example, the second resolution is only determined if a determination of no motion is made. In another example, determining the amount of motion comprises: identifying at least one corresponding object in two or more frames of the input video; and comparing the position of the corresponding object in each of the two or more frames.

Detecting motion enables resolution to be determined more easily and accurately. Bitrate changes according to the presence and amount of mount in a video and it is more difficult to evaluate a relationship between bitrate and resolution if motion is present in a video. By detecting the presence of motion, it can be ensured that only video frames exhibiting no motion or a small amount of motion are used for the determination of resolution.

According to a second aspect of the present invention, there is provided apparatus for video enhancement, the apparatus comprising a receiver and a processor; wherein the receiver is configured to receive an input video and a video container for the input video, wherein the video container comprises at least a first resolution and video content data comprising codec type, bitrate and frame rate of the input video, wherein the first resolution is the resolution of the input video; and wherein the processor is configured to: determine a second resolution from the first resolution and the video content data of the video container; compare the first resolution to the second resolution; determine a local contrast enhancement operation window size in dependence on the result of the comparison between the first resolution and the second resolution, wherein the local contrast enhancement operation window size depends on the lowest of the first resolution and the second resolution; and apply a local contrast enhancement algorithm with the determined window size to the input video; and wherein the second resolution is the native resolution of the input video.

In one example, the processor is configured to output the input video to an electronic display device after applying the local contrast enhancement algorithm.

In an example, the processor is configured to determine the amount of motion in the input video before determining the second resolution. In one example, the processor is configured to determine the second resolution only if the processor has made a determination of no motion. In another example, to determine the amount of motion, the processor is configured to: identify at least one corresponding object in two or more frames of the input video; and compare the position of the corresponding object in each of the two or more frames.

Embodiments of the present invention will now be described in detail with reference to the accompanying drawings, in which:
Figure 1 is a schematic representation of a video display system;
Figure 2 is a schematic representation of video frames divided into operation windows; and
Figure 3 is a flowchart demonstrating a method of video enhancement in accordance with an embodiment of the present invention.

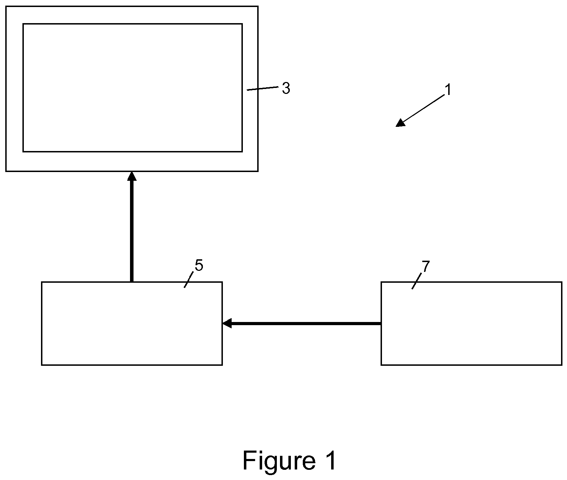

The present invention is suitable for enhancing the quality of video images for a video display system 1 such as that demonstrated in Figure 1. A video display system 1 may comprise at least one electronic display device 3 of a wide range of types, including (but not limited to) personal computer (PC) monitors, television sets, tablet computers, smartphones, and devices with screens using display technology such as liquid crystal displays (LCDs), light-emitting diodes (LEDs), organic light-emitting diodes (OLEDs) or plasma.

In an embodiment of the present invention, the video image quality enhancement is be carried out on a video by a processor 5 connected to a receiver 7 which is able to receive video input. The processor 5 can execute image quality improvement operations, such as local contrast enhancement. In some embodiments, the processor 5 is connected to at least one electronic display device 3 upon which the enhanced video may be displayed.

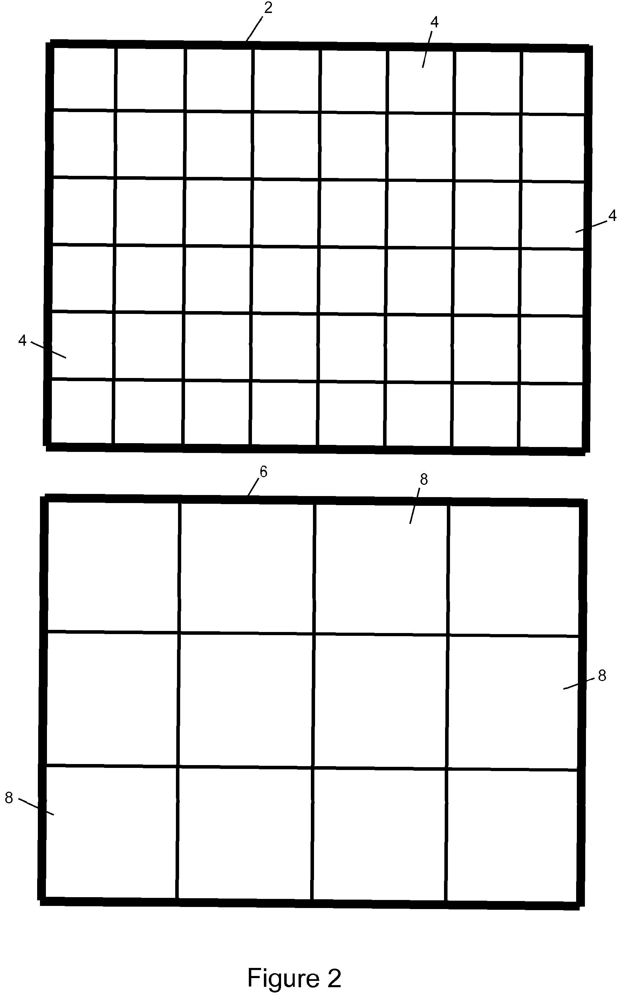

In an embodiment, the quality of video images is enhanced through the performance of local contrast enhancement operations on a frame 2, 6 divided into local contrast enhancement operation windows 4, 8, as demonstrated in Figure 2. The sizes of the operation windows 4, 8 depend on provided and determined resolution information.

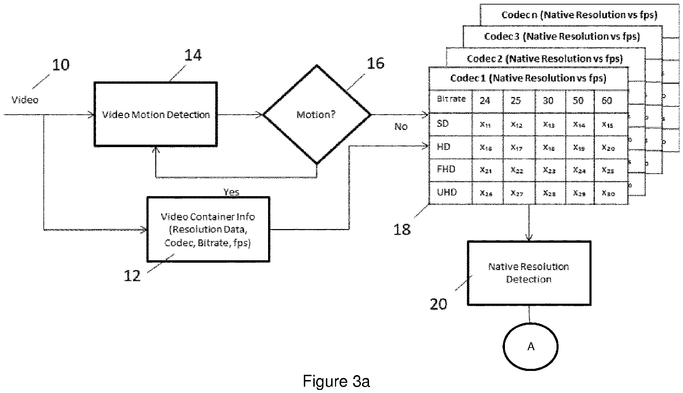

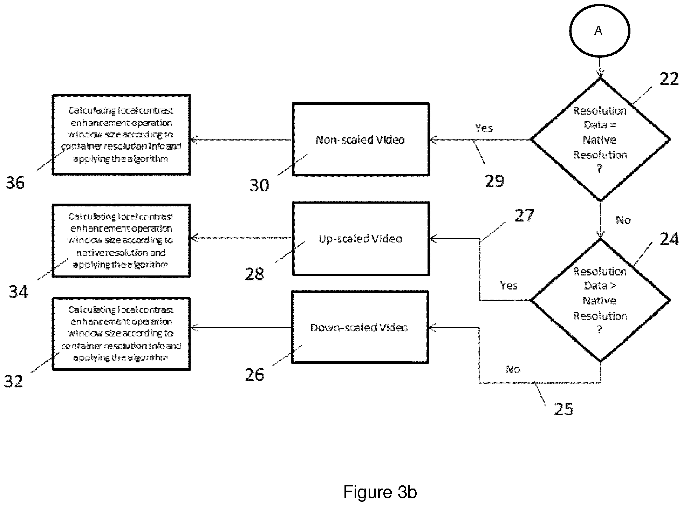

As demonstrated by the flow chart in Figure 3, the processor 5 receives an input video 10 to be displayed, including a video container 12. The video container 12 provides resolution data and also provides other properties of the input video 10, namely bitrate, codec type and frame rate.

The processor 5 uses the resolution data and also the other video container information, namely bitrate, codec type and frame rate, to determine the native resolution 20 of the video 10. As shown in Figure 3, the method uses the codec type and the relationships between bitrate, frame rate and resolution to determine the native resolution 20. For example, higher bitrates and higher frame rates generally mean higher resolutions.

Figure 3 shows that the processor 5 refers to a database storing lookup tables 18 in order to determine native resolution. The processor 5 receives input parameters from the video container 12, uses the input parameters to identify the corresponding native resolution in the database and selects the identified native resolution 20 for the next step in the method.

In embodiments, the database stores a lookup table for each possible codec type, in which stored values can be matched to input values from the video container. In embodiments, for a specific codec type, stored values of native resolution can be matched to various combinations of container resolution, bitrate and frame rate. The table for Codec 1 in the embodiment of Figure 3 shows columns for frame rates of 24, 25, 20, 50 and 60 frames per second (fps), and rows for native resolutions of standard definition (SD), high definition (HD), full HD (FHD) and ultra HD (UHD). Bitrates of X₁₁ to X₃₀ are provided at the intersections of the rows and columns. Therefore, in this embodiment, codec, frame rate and bitrate data can be used in the lookup tables to determine native resolution. For example, for Codec 1, a bitrate of X₁₃ and a frame rate of 30 fps, the native resolution would be determined to be standard definition (SD).

In embodiments, the presence or lack of motion in the input video 10 is detected prior to the determination of native resolution 20, as shown by the video motion detection 14 in Figure 3. Motion detection 14 is used as a filter or gatekeeper to the continuation of the rest of the method. The processor 5 can carry out video motion detection 14 on the input video 10 in order to determine the presence and/or amount of motion 16 in the video 10. Any known method of video motion detection 14 may be used, such as determining the positions of objects in frames, for example by segmenting objects using pixel values, colour or depth information, and comparing the positions of objects between frames.

The processor 5 can use the video motion detection 14 to analyse video frames until no motion is detected between frames, for example between consecutive frames. Bitrate changes according to the presence and amount of mount in a video 10, and it is more difficult to evaluate a relationship between bitrate and resolution if motion is present in a video 10. It is therefore useful to determine whether motion is present and/or how much motion is present between frames of a video 10. The video motion detection 14 detects the presence of motion so that only video frames exhibiting no motion or a small amount of motion are used for the determination of native resolution 20. The processor 5 can perform the video motion detection 14 repeatedly until there is no motion detected between related frames. Once it has been determined that there is no motion, the processor 5 can then use the appropriate video container information 12 and the lookup tables 18 to detect native resolution 20.

Once the native resolution of the video 10 has been determined 20, the processor 5 compares the resolution data from the video container (container resolution) with the native resolution in order to evaluate the relative levels of resolution 22, 24. The result of the comparison is then used in the determination of the size of the operation windows by the local contrast enhancement algorithm. The resolution comparison 22, 24 will ascertain whether the determined native resolution 20 is greater than, equal to, or lower than the container resolution.

By comparing the resolutions, it is possible to determine whether it is optimal to base the sizes of the operation windows 4, 8 on the container resolution or on the native resolution, and then proceed to determine the operation window size on this basis 32, 34, 36. The local contrast enhancement algorithm with the determined window size is then applied to the video 10 to enhance its quality.

The native resolution being greater than the container resolution 25 indicates that the video has been down-scaled 26, and the native resolution being lower than the container resolution 27 indicates that the video has been up-scaled 28. The difference between the native resolution and container resolution provides the extent by which the video has been scaled. If the native resolution and container resolution are the same 29, then the video has not been scaled 30.

Once the scaling status 26, 28, 30 of the video 10 has been established, the processor 5 determines the appropriate size of the operation windows 4, 8 in the local contrast enhancement algorithm 32, 34, 36.

One of the parameters which affects the size of the operation windows determined by the local contrast algorithm is native resolution. Therefore, if the native resolution is lower than the container resolution, it already means that there is a relatively low level of detail in the video, and the non-existent details cannot be clarified or revealed by the local contrast enhancement algorithm. Therefore, the operation window size determined according to the native resolution, rather than the container resolution, will be larger and this will result in fewer operations carried out per frame.

If the video has been down-scaled 26 or not scaled at all 30 the local contrast enhancement operation window size is determined according to the container resolution 32, 36, but if the video has been up-scaled 28, the local contrast enhancement operation window size is determined according to the native resolution 34.

This means that the size of the operation window 4, 8 is adaptive to the resolution of the input video 10. If the native resolution is high, i.e. the same as or higher than the container resolution, the operation window size should be smaller, as illustrated by the smaller operation windows 4 in the upper frame 2 of Figure 2, to be able to show more details. However, if the native resolution is low, i.e. lower than the container resolution, the operation window size can be larger, as illustrated by the larger operation windows 8 in the lower frame 6 of Figure 2, without lowering the effectiveness of the contrast enhancement. The operation window size according to the native resolution may be calculated as a proportion of the operation window size according to the container resolution.

Therefore, for an up-scaled video 10, basing the determination on the lower native resolution rather than the higher container resolution means that the size of the operation windows 8 can be determined to be larger than for a down-scaled or non-scaled video 10. Dividing a frame 6 into larger operation windows 8 results in fewer operation windows 8 per frame 6, and thus a decreased number of operations to be performed per frame 6. Decreasing the number of operations performed per frame 6 has the advantages of reducing power consumption and reducing the bandwidth use. This also provides earnings from memory since the bandwidth is reduced.

If a video 10 has been up-scaled such that its native resolution is lower than its container resolution, applying previously known local contrast enhancement methods requires a higher power consumption than the present method because the local contrast enhancement algorithm presumes that the video 10 has the higher container resolution. Presuming a higher resolution than is actually present results in the performance of redundant operations and thus wastes energy.

Once the size of the operation windows 4, 8 has been determined, the processor 5 applies the local contrast enhancement algorithm to the video 10. The present method provides the ability to change the local contrast enhancement algorithm parameters according to native resolution in order to minimise power consumption and improve video quality in terms of local detail enhancement. Any appropriate known algorithm for local contrast enhancement may be used in this method, such as the method of contrast enhancement described in EP 1814078 A1.

The processor 5 can then cause the enhanced video to be output on an electronic display device 3 to which the processor 5 is connected.

Enhancing a video in accordance with the above-described embodiments of the present invention can improve image quality, video latency and power consumption through adaptive local contrast enhancement.

Embodiments of the present invention have been described with particular reference to the examples illustrated. However, it will be appreciated that variations and modifications may be made to the examples described within the scope of the appended claims.

## Claims

1. A method for video enhancement, the method comprising:
receiving an input video (10);
receiving a video container (12) for the input video, wherein the video container comprises at least a first resolution and video content data comprising codec type, bitrate and frame rate of the input video;
determining a second resolution (20) from the first resolution and the video content data of the video container;
comparing the first resolution to the second resolution (22, 24);
determine a local contrast enhancement operation window size in dependence on the result of the comparison between the first resolution and the second resolution (32, 34, 36) wherein the local contrast enhancement operation window size depends on the lowest of the first resolution and the second resolution;
applying a local contrast enhancement algorithm with the determined window size to the input video;
wherein the first resolution is the resolution of the input video; and
wherein the second resolution is the native resolution of the input video.

2. The method of claim 1, further comprising determining the presence and/or amount of motion in the input video before determining the second resolution

3. The method of claim 2, wherein the second resolution is only determined if a determination of no motion is made.

4. Apparatus for video enhancement, the apparatus comprising a receiver and a processor;
wherein the receiver is configured to receive an input video and a video container for the input video, wherein the video container comprises at least a first resolution and video content data comprising codec type, bitrate and frame rate of the input video, wherein the first resolution is the resolution of the input video; and
wherein the processor is configured to:
determine a second resolution from the first resolution and the video content data of the video container;
compare the first resolution to the second resolution;
determine a local contrast enhancement operation window size in dependence on the result of the comparison between the first resolution and the second resolution, wherein the local contrast enhancement operation window size depends on the lowest of the first resolution and the second resolution; and
apply a local contrast enhancement algorithm with the determined window size to the input video; and
wherein the second resolution is the native resolution of the input video.

5. The apparatus of claim 4, wherein the processor is configured to determine the presence and/or amount of motion in the input video before determining the second resolution.

6. The apparatus of claim 5, wherein the processor is configured to determine the second resolution only if the processor has made a determination of no motion

## Patentansprüche

1. Verfahren zur Videoverbesserung, wobei das Verfahren umfasst:
Empfangen eines Eingangsvideos (10);
Empfangen eines Videocontainers (12) für das Eingangsvideo, wobei der Videocontainer mindestens eine erste Auflösung und Videoinhaltsdaten, die einen Codec-Typ,
eine Bitrate und Bildrate des Eingangsvideos umfassen, umfasst;
Bestimmen einer zweiten Auflösung (20) aus der ersten Auflösung und den Videoinhaltsdaten des Videocontainers;
Vergleichen der ersten Auflösung mit der zweiten Auflösung (22, 24);
Bestimmen einer Fenstergröße für einen lokalen Kontrastverbesserungsvorgang in Abhängigkeit von dem Ergebnis des Vergleichs zwischen der ersten Auflösung und der zweiten Auflösung (32, 34, 36),
wobei die Größe des Fensters für den lokalen Kontrastverbesserungsvorgang von der niedrigsten der ersten Auflösung und der zweiten Auflösung abhängt;
Anwenden eines Algorithmus zur lokalen Kontrastverbesserung mit der bestimmten Fenstergröße auf das Eingangsvideo;
wobei die erste Auflösung die Auflösung des Eingangsvideos ist; und
wobei die zweite Auflösung die ursprüngliche Auflösung des Eingangsvideos ist.

2. Verfahren nach Anspruch 1, ferner umfassend das Bestimmen des Vorhandenseins und/oder des Ausmaßes von Bewegung in dem Eingangsvideo vor dem Bestimmen der zweiten Auflösung.

3. Verfahren nach Anspruch 2, wobei die zweite Auflösung nur bestimmt wird, wenn eine Bestimmung gemacht wird, dass keine Bewegung vorliegt.

4. Vorrichtung zur Videoverbesserung, wobei die Vorrichtung einen Empfänger und einen Prozessor umfasst;
wobei der Empfänger dazu konfiguriert ist, ein Eingangsvideo und einen Videocontainer für das Eingangsvideo zu empfangen, wobei der Videocontainer mindestens eine erste Auflösung und Videoinhaltsdaten, die den Codec-Typ, die Bitrate und die Bildrate des Eingangsvideos umfassen, umfasst, wobei die erste Auflösung die Auflösung des Eingangsvideos ist; und
wobei der Prozessor konfiguriert ist, um:
eine zweite Auflösung aus der ersten Auflösung und den Videoinhaltsdaten des Videocontainers zu bestimmen;
die erste Auflösung mit der zweiten Auflösung zu vergleichen;
eine Fenstergröße eines lokalen Kontrastverbesserungsvorgangs in Abhängigkeit von dem Ergebnis des Vergleichs zwischen der ersten Auflösung und der zweiten Auflösung zu bestimmen, wobei die Fenstergröße des lokalen Kontrastverbesserungsvorgangs von der niedrigsten der ersten Auflösung und der zweiten Auflösung abhängt; und
einen Algorithmus zur lokalen Kontrastverbesserung mit der bestimmten Fenstergröße auf das Eingangsvideo anzuwenden; und
wobei die zweite Auflösung die ursprüngliche Auflösung des Eingangsvideos ist.

5. Vorrichtung nach Anspruch 4, wobei der Prozessor dazu konfiguriert ist, vor dem Bestimmen der zweiten Auflösung das Vorhandensein und/oder das Ausmaß von Bewegung in dem Eingangsvideo zu bestimmen.

6. Vorrichtung nach Anspruch 5, wobei der Prozessor dazu konfiguriert ist, die zweite Auflösung nur zu bestimmen, wenn der Prozessor eine Bestimmung gemacht hat, dass keine Bewegung vorliegt.

## Revendications

1. Procédé d'amélioration vidéo, le procédé comprenant :
la réception d'une vidéo d'entrée (10) ;
la réception d'un conteneur vidéo (12) pour la vidéo d'entrée, le conteneur vidéo comprenant au moins une première résolution et des données de contenu vidéo comprenant un type de codec, un débit binaire et une fréquence d'image de la vidéo d'entrée ;
la détermination d'une seconde résolution (20) à partir de la première résolution et des données de contenu vidéo du conteneur vidéo ;
la comparaison de la première résolution à la seconde résolution (22, 24) ;
la détermination d'une taille de fenêtre d'opération d'amélioration de contraste local en fonction du résultat de la comparaison entre la première résolution et la seconde résolution (32, 34, 36)
dans lequel la taille de fenêtre d'opération d'amélioration de contraste local est fonction de la résolution la plus basse parmi la première résolution et la seconde résolution ;
l'application d'un algorithme d'amélioration de contraste local avec la taille de fenêtre déterminée à la vidéo d'entrée ;
dans lequel la première résolution est la résolution de la vidéo d'entrée ; et
dans lequel la seconde résolution est la résolution optimale de la vidéo d'entrée.

2. Procédé selon la revendication 1, comprenant en outre la détermination de la présence et/ou de la quantité de mouvement dans la vidéo d'entrée avant la détermination de la seconde résolution.

3. Procédé selon la revendication 2, dans lequel la seconde résolution est déterminée uniquement si une détermination de non-mouvement est effectuée.

4. Appareil pour l'amélioration vidéo, l'appareil comprenant un récepteur et un processeur ;
dans lequel le récepteur est configuré pour recevoir une vidéo d'entrée et un conteneur vidéo pour la vidéo d'entrée, le conteneur vidéo comprenant au moins une première résolution et des données de contenu vidéo comprenant un type de codec, un débit binaire et une fréquence d'image de la vidéo d'entrée, la première résolution étant la résolution de la vidéo d'entrée ;
dans lequel le processeur est configuré pour :
déterminer une seconde résolution à partir de la première résolution et des données de contenu vidéo du conteneur vidéo ;
comparer la première résolution à la seconde résolution ;
déterminer une taille de fenêtre d'opération d'amélioration de contraste local en fonction du résultat de la comparaison entre la première résolution et la seconde résolution, la taille de fenêtre d'opération d'amélioration de contraste local étant fonction de la résolution la plus basse parmi la première résolution et la seconde résolution ; et
appliquer un algorithme d'amélioration de contraste local avec la taille de fenêtre déterminée à la vidéo d'entrée ; et
dans lequel la seconde résolution est la résolution optimale de la vidéo d'entrée.

5. Appareil selon la revendication 4, dans lequel le processeur est configuré pour déterminer la présence et/ou la quantité de mouvement dans la vidéo d'entrée avant la détermination de la seconde résolution.

6. Appareil selon la revendication 5, dans lequel le processeur est configuré pour déterminer la seconde résolution uniquement si une détermination de non-mouvement est effectuée par le processeur.
